# EUROPÄISCHE PATENTSCHRIFT

(11) **EP 2 336 095 B1**
(45) Veröffentlichungstag und Bekanntmachung des Hinweises auf die Patenterteilung: **11.07.2012**
(21) Anmeldenummer: 10190814.3
(22) Anmeldetag: 11.11.2010
(51) Int. Cl.: C04B 28/02

(54) **Dünnbettmörtel**
Thin-bed mortar
Mortier de collage mince

(30) Priorität: 16.12.2009 DE 102009058410
(43) Veröffentlichungstag der Anmeldung: 22.06.2011
(73) Patentinhaber: Fels-Werke GmbH, 38640 Goslar (DE)
(72) Erfinder: Zeh, Manfred, 28259, Bremen (DE); Stelzner, Jana, 06886, Lutherstadt Wittenberg (DE)
(74) Vertreter: Solf, Alexander

(56) Entgegenhaltungen:
- DE-A1- 1 571 336
- DE-A1- 1 951 171
- DE-A1- 2 114 354
- DE-A1- 3 035 040
- DE-A1- 19 916 117
- DE-A1-102004 030 921
- DE-C1- 4 218 143
- DE-U1- 29 816 149
- US-A1- 2004 044 103

## Beschreibung

Die Erfindung betrifft einen Dünnbettmörtel zur Vermörtelung von Mauersteinen und dessen Verwendung.

Bei der Erstellung von Mauerwerk werden Mauersteine oder Wandbauplatten an ihren Lager- und Stoßstellen über eine Mörtelfuge miteinander verbunden. Je nach Art der verwendeten Steine oder Platten werden Mauerfugen unterschiedlich dick ausgebildet, wobei normale Fugen von 10 - 12 mm oder Mittelbettfugen von ca. 6 mm oder sogenannte Dünnbettfugen von 1 - 3 mm üblich sind. Dünnbettfugen werden mit sogenannten Dünnbettmörteln erstellt. Solche Dünnbettmörtel werden als Werk-Trockenmörtel hergestellt und auf der Baustelle mit Wasser angemischt verarbeitet.

Der Begriff Dünnbettmörtel wird im Folgenden für die trockene Mischung verwendet. Im verarbeiteten und erhärteten Zustand wird von der Mörtelfuge gesprochen.

In üblichen Dünnbettmörteln ist das Größtkorn durch die Norm EN 998-2 auf < 1,0 mm begrenzt. Somit können auch nur Fugendicken in den Stoßfugen (senkrechte Fugen) und Lagerfugen (waagerechte Fugen) bis max. 1,0 mm hergestellt werden. Soll eine dickere Lagerfuge bis 3 mm hergestellt werden - zum Beispiel zum Ausgleich von Unebenheiten oder Höhendifferenzen - wird üblicherweise ein sogenannter Stützkorn-Dünnbettmörtel mit max. 3,0 mm Korngröße eingesetzt. Dieser Mörtel ist besonders wichtig für schwere Steine und Planelemente, da diese schweren Steine eine Fuge fast auf 0 mm zusammendrücken können, wobei der Dünnbettmörtel seitlich aus der Fuge herausgequetscht wird. Ein solcher Stützkorn-Dünnbettmörtel entspricht nicht der Norm und muss daher vom Institut für Bautechnik bauaufsichtlich zugelassen werden und er kann auch nur in der Lagerfuge Anwendung finden. Die Stoßfuge hingegen wird knirsch mit oder ohne Mörtel < 3 mm ausgeführt.

Sollen aus Gründen höherer Wandfestigkeiten und Risssicherheiten im Fugenbereich sowohl die Lagerfuge als auch die Stoßfuge vermörtelt werden, müssen bei schweren Steinen ab z. B. 20 kg Gewicht zwei verschiedene Dünnbottmörtelsorten - ein Stützkorn-Dünnbettmörtel für die Lagerfuge und ein genormter Dünnbettmörtel - für die Stoßfuge eingesetzt werden. Da zwei Mörtelsorten für eine Wand zu Verwechslungen führen können, ist diese Bauweise nicht zulässig. Darüber hinaus würden die Kosten je m³ Mauerwerk extrem ansteigen.

Der Erfindung liegt die Aufgabe zugrunde, einen Dünnbettmörtel zur Verfügung zu stellen, mit dem nach dem Anmachen mit Wasser (im Folgenden Dünnbottfrischmörtel genannt) schwere Steine und Planelemente ab z. B. 20 kg und z. B. bis 150 kg und darüber im Dünnbettverfahren verarbeitet werden können und gleichzeitig die Fugendicken entsprechend den Anforderungen ausgeführt werden, und zwar dergestalt, dass die Stoßfuge max. 1,0 mm dick ausgeführt wird und die Lagerfuge auf 1 bis 3 mm und darüber bis z. B. 5 mm ausgeführt werden kann, ohne dass ein Stützkorn über 1 mm verwendet wird und auch durch das hohe Gewicht der Steine kein Mörtel seitlich aus den Lagerfugen gequetscht wird.

Die Erfindung soll die Eigenschaften eines herkömmlichen Dünnbettmörtels mit den Eigenschaften eines üblichen Stützkorn-Dünnbettmörtels vereinen, ohne jedoch ein Stützkorn über 1 mm einsetzen zu müssen. Durch den Verzicht des Stützkorns über 1 mm soll mit dem gleichen Material die Vermörtelung von Stoßfugen von 1 mm Dicke und von Lagerfugen von 1 bis zumindest 3 mm Dicke problemlos möglich sein.

Nach der Erfindung werden über die Zugabe spezieller Additive in dem erfindungsgemäßen Dünnbettfrischmörtoi Eigenschaften eingestellt, mit denen auch - je nach Auftragsdicke - größere Lagerfugendicken gewährleistet werden können, ohne dass die Fuge aufgrund des Gewichts des aufgesetzten Steins zusammensackt, der Stein aufschwimmt oder der Dünnbettfrischmörtel seitlich herausgequetscht wird.

Die Eigenschaften im Dünnbettfrischmörtel zeigen folgende Wirksamkeit: Solange der Dünnbettfrischmörtel nach dem Anmischen mit Wasser in der Verarbeitungsphase bewegt wird (Mörtelschlitten, Kelle, etc.) hat der Dünnbettfrischmörtel eine weich-cremige, plastische bzw. bildsame und leicht verarbeitbare Konsistenz. Wird der Dünnbettfrischmörtel durch Auflast (schwere Kalksandsteine oder Planelemente) unter Druck gesetzt, blockt der Mörtel und widersetzt sich der Auflast. Außer einem vernachlässigbaren Verdichtungsmaß wird die Fugendicke auf dem vorgegebenen Niveau gehalten, ohne dass der Dünnbettfrischmörtel seitlich herausgequetscht wird.

Erfindungsgemäße Dünnbettmörtel weisen nur Bestandteile auf, die Körnungen mit einer Korngröße bis maximal 1 mm haben und folgende Bestandteile enthalten:
mindestens ein mineralisches, vorzugsweise hydraulisches Bindemittel, mindestens ein Zusatzmittel, mindestens einen hydraulischen Zuschlagstoff, wie Gesteinssand und/oder Gesteinsmehl, sowie 5 - 20, insbesondere 7 - 15 Gew.-% Kalziumsilikathydratmaterial und/oder Bentonit.

Erfindungsgemäß können die Dünnbettmörtel folgende spezielle Zusammensetzungen aufweisen:
15 - 50, insbesondere 25 - 40 Gew.-% Bindemittel,
0,1 - 4, insbesondere 1 - 3 Gew.-% Zusatzmittel,
5 - 20, insbesondere 7 - 15 Gew.-% Kalziumsilikathydratmaterial und/oder Bentonit,

Rest mindestens einen Gesteinssand, wie Quarzsand und/oder Kalksteinbrechsand und/oder mindestens ein Gesteinsmehl wie Kalksteinmehl und/oder Quarzmehl.

Als Bindemittel wird ein mineralisches Bindemittel, insbesondere hydraulisches Bindemittel, z. B. Portlandzement und/oder Portland-Compositzement und/oder Hochofenzement verwendet.

Die Zusatzmittel sollen im Wesentlichen die Verarbeitungseigenschaften des Mörtels beeinflussen. Verwendet werden zum Beispiel Wasserrückhaltemittel, z. B. Methylcellulose, Abbinde- und/oder Erhärtungsbeeinflussungsmittel, Haftverbesserer.

Das Gesteinsmehl, z. B. das handelsübliche Kalksteinmehl soll zum Beispiel feiner sein als 200 µm, insbesondere feiner als 90 µm und eine normale, zum Beispiel Gauß'sche Glockenkurven-Kornverteilung sowie spezifische Oberflächen nach Blaine zwischen 3000 und 6000 cm²/g aufweisen. Das Kalksteinmehl kann übliche Nebenbestandteile in Mengen bis zu 10 Gew.-% enthalten. Anstelle des bevorzugten Kalksteinmehls kann auch mit Vorteil Quarzmehl als Gesteinsmehl verwendet werden oder das Kalksteinmehl teilweise durch Quarzmehl ersetzt sein.

Als Gesteinssand wird vorzugsweise Quarzsand in Form von gewaschenem und getrocknetem Quarzsand mit einer Maximalkorngröße von 1 mm und einer normalen z. B. Gauß'schen Glockenkurven-Kornverteilung verwendet. Anstelle von Quarzsand kann auch mit Vorteil Kalksteinbrechsand und/oder andere Gesteinskömungen nach DIN EN 13139 verwendet werden. Quarzsand kann auch teilweise durch Kalksteinbrechsand und/oder andere Gesteinskörnungen ersetzt werden.

Das Kalziumsilikathydratphasenmaterial ist ein synthetisch aus einer Kalkkomponente und einer Kieselsäurekomponente hydrothermal hergestelltes Kalziumsilikathydratphasenmaterial aus mindestens einer Kalziumsilikathydratphase und besteht vorzugsweise überwiegend, d. h. mit mehr als 50 Gew.-% aus Tobermorit und/oder Xonotlit. Vorzugsweise beträgt der Tobermoritoder Xonotlitanteil über 80 Gew.-%. Die Feinheit des Kalziumsilikathydratphasenmaterials liegt zweckmäßigerweise zwischen 0 und 0,5, insbesondere zwischen 0 und 0,2 mm.

Derartiges Kalziumsilikathydratphasenmaterial wird zum Beispiel als Circosil-Funktional-Filler (Tobermorit) oder Circolit-Funktional-Filler (Xonotlit) auf dem Markt von der Firma Cirkel GmbH & Co. KG, 45721 Haltern, angeboten, u. a. auch in Form von Putzrezepturen, die aber als Dünnbettmörtel unbrauchbar sind, weil das erfindungsgemäße Stützgerüstgefüge nicht erzielbar ist.

Das Kalziumsilikathydratphasenmaterial kann aber auch andere bekannte Kalziumsilikathydratphasen, zum Beispiel CSH I und/oder CSH II aufweisen oder daraus bestehen, wobei die Feinheit die gleiche sein sollte wie oben angegeben.

Als Bentonit bezeichnet man Tone mit mindestens 50 Gew.-% Tonmineralanteil von Dreischichtsilikaten der Smektit-Gruppe. Es gibt bekanntlich verschiedene Bentonittypen. Für die Zwecke der Erfindung wird vorzugsweise ein sogenannter Natrium-Bentonit - natürlich oder aktiviert - verwendet. Die Feinheit des Bentonits sollte zum Beispiel bei < 20 Gew.-% Rückstand auf dem 63 µm Sieb liegen.

Es ist überraschend, dass eine bis auf einige Zusatzmittel ausschließlich mineralische Dünnbettmörtelmischung als Frischmörtel die Eigenschaft aufweist, bei einer Dicke bis z. B. mindestens 3 mm unmittelbar nach dem Auftrag derart zu blocken bzw. anzusteifen, dass Mauersteine bis zu einem Gewicht von zum Beispiel 150 kg und darüber auf eine mit einem erfindungsgemäßen Dünnbettfrischmörtel belegte Lagerfugenschicht aufgesetzt werden können, ohne dass der Mauerstein aufschwimmt oder der Dünnbettfrischmörtel seitlich aus der Lagerfuge herausgequetscht wird. Welche Wechselwirkungen in der Mischung diese Eigenschaft in den erfindungsgemäßen Dünnbettfrischmörtelmischungen bewirken, ist noch unbekannt.

Bisher hat man bei Dünnbettfrischmörteln im Wesentlichen auf das sogenannte Standverhalten geachtet, so dass der Frischmörtel auch auf senkrechte Flächen aufgetragen werden konnte, ohne nach dem Auftragen abzufließen oder durch das Gegensetzen eines Steins gegen eine senkrechte Fugenschicht aus der Fuge herausgequetscht zu werden. Dies gelingt zum Beispiel durch mineralische Zusatzstoffe in Form von Quarzmehl oder Kreide (DE 93 21 219 U1, Seite 7). Mit dem Einstellen der Thixotropie mit den Zusatzstoffen gelingt es aber nicht zu gewährleisten, dass schwere Mauersteine von zum Beispiel 20 kg bis 150 kg Gewicht auf zum Beispiel 3 mm dicke Lagerfugen aufgesetzt werden können, ohne dass ein 3 mm Stützkorn in den Frischmörtel eingebracht worden ist. Mit der Erfindung gelingt es ohne ein 3 mm Stützkorn, einen Dünnbettmörtel zur Verfügung zu stellen, der als Frischmörtellagerfugenschicht mit einer Dicke bis mindestens 3 mm die Last eines dieser schweren Mauersteine mit einem Gewicht z. B. bis zu 150 kg aufnehmen kann, ohne dass die Schichtdicke sich merklich verringert und ohne dass Frischmörtel seitlich aus der Lagerfuge in beachtlicher Menge herausgequetscht wird. Wesentlich ist, dass der erfindungsgemäße Dünnbettmörtel rein mineralisch aufgebaut ist und die Bestandteile ohne weiteres und kostengünstig auf dem Markt erhältlich sind.

Mit dem erfindungsgemäßen Dünnbettmörtel ist es somit möglich, nicht nur Stoßfugen mit max. 1 mm Dicke auszuführen, sondern auch für schwere Steine tragfähige Lagerfugen mit 1 bis mindestens 3 mm zur Verfügung zu stellen, ohne dafür zwei unterschiedliche Mörtelzusammensetzungen vorhalten zu müssen. Der erfindungsgemäße Dünnbettmörtel ergibt mit Wasser angemacht einen Frischmörtel, der als senkrechte Stoßfugenschicht nicht abfließt und beim Gegensetzen eines Steins sich genauso steif verhält wie in der Regel in der dickeren Lagerfugenschicht.

Vorzugsweise werden aus den erfindungsgemäßen Trockenmörtelmischungen Frischmörtelmischungen mit Wasserfeststoffwerten zwischen 0,20 und 0,40, insbesondere zwischen 0,25 und 0,35 hergestellt.

## Patentansprüche

1. Dünnbettmörtel zur Vermörtelung von Mauersteinen mit Gewichten über 20 kg, insbesondere bis 150 kg und gegebenenfalls darüber mit einer Lagerfuge über 1 mm bis mindestens 3 mm Dicke in Form einer mineralischen Werktrockenmischung enthaltend 15 - 50 Gew.-% mindestens eines mineralischen, vorzugsweise hydraulischen Bindemittels, 0,1 - 4 Gew.-% mindestens eines Zusatzmittels sowie 5 - 20 Gew.-% Kalziumsilikathydratmaterial und/oder Bentonit und als Rest mindestens einen mineralischen Zuschlagstoff wie Gesteinssand und/oder Gesteinsmehl, wobei die Bestandteile der Werktrockenmischung Körnungen bis maximal 1 mm Korngröße aufweisen.

2. Dünnbettmörtel nach Anspruch 1,
**gekennzeichnet durch**
folgende Zusammensetzungen:
25 - 40 Gew.-% Bindemittel,
1 - 3 Gew.-% Zusatzmittel,
7 - 15 Gew.-% Kalziumsilikathydratmaterial
und/oder Bentonit,
Rest mindestens einen Gesteinssand, wie Quarzsand und/oder Kalksteinbrechsand und/oder mindestens ein Gesteinsmehl wie Kalksteinmehl und/oder Quarzmehl.

3. Dünnbettmörtel nach Anspruch 1 und/oder 2,
**dadurch gekennzeichnet, dass**
das Bindemittel Portlandzement oder Portland-Compositzement oder Hochofenzement aufweist oder aus einem der Bindemittel oder aus Mischungen daraus besteht.

4. Dünnbettmörtel nach einem oder mehreren der Ansprüche 1 bis 3,
**dadurch gekennzeichnet, dass**
das Zusatzmittel ein Zusatzmittel ist, das die Verarbeitungseigenschaften des Mörtels beeinflusst hinsichtlich Wasserrückhaltung, Abbinden und Erhärten sowie Haftung am Untergrund.

5. Dünnbettmörtel nach einem oder mehreren der Ansprüche 2 bis 4,
**dadurch gekennzeichnet, dass**
das Kalksteinmehl eine spezifische Oberfläche nach Blaine zwischen 3000 und 6000 cm²/g und zweckmäßigerweise eine Kornverteilung nach einer Gauß'schen Komverteilungsglockenkurve aufweist.

6. Dünnbettmörtel nach einem oder mehreren der Ansprüche 2 bis 5,
**dadurch gekennzeichnet, dass**
er als Gesteinssand Quarzsand gewaschen und getrocknet, zweckmäßigerweise mit einer Kornverteilung nach einer Gauß'schen Kornverteilungsglockenkurve oder anstelle von Quarzsand oder teilweise ersetzt Kalksteinbrechsand oder andere Gesteinskörnung nach DIN EN 13139 enthält.

7. Dünnbettmörtel nach einem oder mehreren der Ansprüche 1 bis 6,
**dadurch gekennzeichnet, dass**
das Kalziumsilikathydratphasenmaterial ein synthetisch hydrothermal hergestelltes Material ist mit Korngrößen zwischen 0 - 0,5 und 0 - 0,2 mm.

8. Dünnbettmörtel nach einem oder mehreren der Ansprüche 1 bis 7,
**dadurch gekennzeichnet, dass**
Kalziumsilikathydratphasenmaterial im Wesentlichen aus dem Mineral Tobermorit und/oder Xonotlit besteht.

9. Dünnbettmörtel nach einem oder mehreren der Ansprüche 1 bis 8,
**dadurch gekennzeichnet, dass**
der Bentonit ein aktivierter Natrium-Bentonit oder ein natürlicher Natrium-Bentonit ist und zweckmäßigerweise eine Feinheit < 20 Gew.-% Rückstand auf einem 63 µm Sieb hat.

10. Verwendung eines Dünnbettmörtels nach einem oder mehreren der Ansprüche 1 bis 9 als Dünnbettfrischmörtel, indem der trockene Dünnbettmörtel mit Wasserfeststoffwerten zwischen 0,20 und 0,40, insbesondere zwischen 0,25 und 0,35 zu einem Frischmörtel angemacht wird und aus dem Frischmörtel 1 bis mindestens 3 mm dicke Lagerfugen und bis 1 mm dicke Stoßfugen in einem zu erstellenden Mauerwerk für Mauersteine mit Gewichten über 20 kg, insbesondere bis 150 kg und gegebenenfalls darüber, ausgebildet werden.

## Claims

1. A thin-bed mortar for mortaring masonry units with weights above 20 kg, in particular up to 150 kg and optionally above with a coursing joint of over 1 mm to at least 3 mm thickness in the form of a mineral dry pre-mix containing 15 - 50% by weight of at least one mineral, preferably hydraulic, binder; 0.1 - 4% by weight of at least one additive; and 5 - 20% by weight calcium silicate hydrate material and/or bentonite and as remainder at least one mineral aggregate such as rock sand and/or rock powder, the constituents of the dry pre-mix having grain sizes of up to at most 1 mm.

2. A thin-bed mortar according to Claim 1, **characterised by** the following compositions:
25 - 40% by weight of binder,
1 - 3% by weight of additive,
7 - 15% by weight of calcium silicate hydrate material
and/or bentonite,
remainder at least one rock sand, such as silica sand and/or crushed limestone sand and/or at least one rock powder such as limestone powder and/or quartz powder.

3. A thin-bed mortar according to Claim 1 and/or 2, **characterised in that** the binder contains Portland cement or Portland composite cement or blast-furnace cement, or consists of one of the binders or of mixtures thereof.

4. A thin-bed mortar according to one or more of Claims 1 to 3, **characterised in that** the additive is an additive which influences the processing properties of the mortar with regard to water retention, setting and hardening as well as adhesion to the substrate.

5. A thin-bed mortar according to one or more of Claims 2 to 4, **characterised in that** the limestone powder has a Blaine specific surface area of between 3000 and 6000 cm²/g and expediently a particle-size distribution in accordance with a Gaussian particle-size distribution bell curve.

6. A thin-bed mortar according to one or more of Claims 2 to 5, **characterised in that** it contains as rock sand silica sand washed and dried, expediently with a particle-size distribution in accordance with a Gaussian particle-size distribution bell curve, or, instead of silica sand or partially replaced, crushed limestone sand or other rock grains according to DIN EN 13139.

7. A thin-bed mortar according to one or more of Claims 1 to 6, **characterised in that** the calcium silicate hydrate phase material is a synthetically hydrothermally produced material with grain sizes between 0 - 0.5 and 0 - 0.2 mm.

8. A thin-bed mortar according to one or more of Claims 1 to 7, **characterised in that** [the] calcium silicate hydrate phase material consists substantially of the mineral tobermorite and/or xonotlite.

9. A thin-bed mortar according to one or more of Claims 1 to 8, **characterised in that** the bentonite is an activated sodium bentonite or a natural sodium bentonite and expediently has a fineness of < 20% by weight residue on a 63-µm sieve.

10. Use of a thin-bed mortar according to one or more of Claims 1 to 9 as a fresh thin-bed mortar, in that the dry thin-bed mortar is mixed with water/solids ratios of between 0.20 and 0.40, in particular between 0.25 and 0.35, to form a fresh mortar and 1 to at least 3 mm thick coursing joints and up to 1 mm thick cross joints are formed from the fresh mortar in brickwork which is to be built for masonry units with weights above 20 kg, in particular up to 150 kg and optionally above.

## Revendications

1. Mortier de collage mince pour le scellement de pierres de taille pesant plus de 20 kg, en particulier jusqu'à 150 kg et avec en outre, le cas échéant, un joint d'assise de plus de 1 mm jusqu'à au moins 3 mm d'épaisseur sous la forme d'un mélange minéral sec prêt à l'emploi contenant de 15 à 50% en poids d'au moins un liant minéral, de préférence hydraulique, de 0,1 à 4% en poids d'au moins un adjuvant, ainsi que de 5 à 20% en poids d'un matériau à base de silicate de calcium hydraté et/ou de bentonite et pour le reste au moins un granulat minéral tel que du sable de roche et/ou de la poudre de roche, les constituants du mélange sec prêt à l'emploi présentant des granulométries allant jusqu'à une taille de grain maximale de 1 mm.

2. Mortier de collage mince selon la revendication 1, **caractérisé en ce qu'**il présente les compositions suivantes :
25 à 40% en poids de liant,
1 à 3% en poids d'adjuvant,
7 à 15% en poids de matériau à base de silicate de calcium hydraté et/ou de bentonite,
le reste étant au moins un sable de roche tel que le sable de quartz et/ou le sable de calcaire concassé et/ou au moins une poudre de roche telle que la poudre de calcaire et/ou la poudre de quartz.

3. Mortier de collage mince selon la revendication 1 et/ou la revendication 2, **caractérisé en ce que** le liant comprend du ciment Portland ou du ciment Portland composé ou du ciment de haut fourneau ou se compose d'un de ces liants ou de mélanges de ceux-ci.

4. Mortier de collage mince selon l'une ou plusieurs des revendications 1 à 3, **caractérisé en ce que** l'adjuvant est un adjuvant qui influe sur les propriétés de mise en oeuvre du mortier en ce qui concerne la rétention d'eau, la prise et le durcissement ainsi que l'adhérence au subjectile.

5. Mortier de collage mince selon l'une ou plusieurs des revendications 2 à 4, **caractérisé en ce que** la poudre de calcaire présente une aire de surface spécifique suivant la méthode de Blaine comprise dans la plage de 3000 à 6000 cm²/g et de façon appropriée une distribution de sa granulométrie conforme à la courbe de distribution gaussienne en cloche.

6. Mortier de collage mince selon l'une ou plusieurs des revendications 2 à 5, **caractérisé en ce qu'**il contient comme sable de roche du sable de quartz lavé et séché, présentant de façon appropriée une distribution de sa granulométrie conforme à la courbe de distribution gaussienne en cloche, ou, à la place du sable de quartz ou le remplaçant en partie, du sable de calcaire concassé ou d'une autre granulométrie selon la norme DIN EN 13139.

7. Mortier de collage mince selon l'une ou plusieurs des revendications 1 à 6, **caractérisé en ce que** le matériau de la phase silicate de calcium hydraté est un matériau de synthèse produit par voie hydrothermique ayant des tailles de grains comprises dans les plages de 0 à 0,5 et de 0 à 0,2 mm.

8. Mortier de collage mince selon l'une ou plusieurs des revendications 1 à 7, **caractérisé en ce que** le matériau de la phase silicate de calcium hydraté se compose essentiellement des minéraux tobermorite et/ou xonotlite.

9. Mortier de collage mince selon l'une ou plusieurs des revendications 1 à 8, **caractérisé en ce que** la bentonite est une bentonite sodique activée ou une bentonite sodique naturelle et présente de façon appropriée une finesse < 20% en poids de résidu sur un tamis à mailles de 63 µm.

10. Utilisation d'un mortier de collage mince selon l'une ou plusieurs des revendications 1 à 9 en tant que mortier de collage mince frais, dans laquelle le mortier de collage mince sec est préparé avec des rapports eau/solides compris dans la plage de 0,20 à 0,40, en particulier de 0.25 à 0,35, pour former un mortier frais et, à partir de ce mortier frais, des joints d'assise de 1 mm jusqu'à au moins 3 mm d'épaisseur et en outre, le cas échéant, des joints montants jusqu'à 1 mm d'épaisseur sont réalisés dans un ouvrage maçonné à édifier, pour des pierres de taille pesant plus de 20 kg, en particulier jusqu'à 150 kg.
